# EUROPEAN PATENT SPECIFICATION

(11) **EP 1 805 010 B1**
(45) Date of publication and mention of the grant of the patent: **01.12.2021**
(21) Application number: 05800681.8
(22) Date of filing: 20.10.2005
(51) Int. Cl.: B32B 27/08, B32B 27/40, B32B 27/34, B32B 33/00, C08G 18/08, C08G 18/66

(54) **PACKAGING MATERIAL**
VERPACKUNGSMATERIAL
MATERIAU D'EMBALLAGE

(30) Priority: 20.10.2004 FI 20041361
(43) Date of publication of application: 11.07.2007
(73) Proprietor: IonPhasE Oy, 33720 Tampere (FI)
(72) Inventor: NIEMINEN, Jyri, FI-33180 Tampere (FI)
(74) Representative: King, Angela Louise
(86) International application number: PCT/FI2005/000453
(87) International publication number: WO 2006/042903

(56) References cited:
- WO-A-93/15142
- WO-A-02/074534
- GB-A- 1 442 581
- US-A- 4 554 210
- US-A- 5 110 669
- US-A- 5 886 098
- US-A1- 2004 171 752
- None

## Description

The present invention relates to packaging materials. The invention concerns in particular a non-chargeable or weakly chargeable layer structure according to the preamble of Claim 1 which is suitable for the use in packages for, e.g., electronic products and daily consumer goods.

A multilayer structure such as this usually comprises a first electrically non-conductive polymer layer, a second electrically non-conductive polymer layer which is placed at a distance from this, as well as a third polymer layer between these layers which is at least partly electrically conductive or has antistatic properties.

A method, not forming part of the present invention, is also described for producing a non-chargeable or weakly chargeable layer structure of three or more layers, such as a film material.

When two surfaces are separated from each other a migration of electrons between the surfaces is without exception taking place, causing residual charges on the surfaces. This phenomenon is called triboelectricity. If the surface consists of an electrically conductive material, the charge will quickly be discharged, but if the surface consists of an insulation material the charge will persist for a long time in the surface. The accumulation of charge in polymer films causes problems in many applications. For instance, static charges of tens of kilovolts can be accumulated in plastic bags because of rubbing, or the packaging of the products by means of a packing machine is slown down because of the static accumulation of charge in the packaging film. It is known that electronic components and anesthetic gases in hospitals are sensitive to static electric discharges, which can damage the components or set the gases on fire.

Many different attempts have been made to solve the problem. Typically, different antistatic compounds have been afterwards brought onto the surface of a film or they have been fed as additives into a polymer melt in connection with the melt process. However, the problem with these solutions is that the antistatic compounds migrate or are worn away, and eventually the antistaticity disappears from the film. An antistatic compound mixed into a plastic melt tends to disappear during the melt process of the film, and therefore the production of, for example, thin antistatic stretch films is impossible by means of this method. It has to be noted that the static electricity problems generally occur when the relative air humidities are low and conventional antistatic compounds are not functioning.

Another conventional way to solve the problem is to add an electrically conductive coating to a film afterwards. The most generally used method is the vaporization of a thin aluminum layer on the film surface. Polyaniline, polytiophene, polyphyrrole, graphite, carbon black, copper sulfide, conductive metallic oxides, as well as other conductive or semi-conductive materials, which are typically fixed by a binder to the film surface, are typically used in coatings. The problem with this method is among other things that the surface modification decreases the transparency, changes the color of the film, is worn away and is often an expensive separate working phase.

The third conventional way to produce dissipative (i.e. discharging) films is to incorporate conductive particles into the inner structure of a film. Typically, the surface of a coextrusion film consists totally or partly of a polymer into which conductive particles have been mixed. As known, for example, finely divided graphite has been used as particles of this kind. The problem with this solution is among other things the non-transparency of the film and the color, as well as reduced mechanical properties. The conductive particles tend to diverge from each other during the blowing of the film, which destroys the electrical conductivity. On the other hand, because of the required high concentration of conductive particles, typically 5 ― 30 mass %, the production is difficult.

In the patent specification US 6,656,981 a method is disclosed, according to which the accumulation of dust in the polyolefin film is prevented. According to the method polyetherester amide is added to at least one of the external surfaces of a three- or five-layered film.

The patent specification US 4,554,210 discloses a film with a sandwich-structure, the outermost layers of which consist of polyethylene with a surface resistivity of at least 10E16 ohm/sq, and of an electrically conductive, perspiring material between these with a volume resistivity of 10E3 ohm/cm or less.

The patent specification US 6,730,401 discloses a multilayer film structure with at least one outer layer made electro statically dissipative by introducing an internally dissipative polymer or conductive particles into an isolating polymer. The structure includes an electrically conductive inner layer with a surface resistivity decreasing under the level of the pure dissipative surface.

None of the known film structures as such discharges at low humidities.

The purpose of the present invention is to eliminate the drawbacks of the state of the art disclosed above and to create an entirely new type of solution for producing an non-chargeable or weakly chargeable layer structure.

The invention is based on the idea of producing a multilayer polymer film or a similar layer structure with all the properties of a basic polymer film, but which does not charge triboelectrically or otherwise. In connection with the present invention it has surprisingly been found that multilayer films, such as three- or four-layer LD-PE films, produced for example by means of a coextrusion technique do not charge triboelectrically when there is a film consisting of or including an ionically conductive polymer between two non-conductive films in the film. This film forms a part of the inner layer of the film structure. The layer or layers containing the ionically conductive polymer is/are not in the outest layers of the film. An inner layer such as this can be produced substantially thinner than the surface layers, regardless of which the insulating surface layers get dissipative properties, that is, they do not charge electrostatically or they charge only weakly. An ionically conductive polymer functions already as a layer of a thickness of about 1 micrometer.

The structure according to the present invention is most suitably a coextruded film structure comprising at least three adjacent/superimposed layers of which at least one forming the film's inner or middle layer contains an ionically conductive polymer or polymer blend. The layer structure can, however, also be produced of blown films or planar films by laminating or even of planar films by deep drawing. The film can be applied to a paper or cardboard substrate in a molten form, e.g., by curtain coating. Substantial for the product is that the layers are making direct contact with each other and are mutually fixed.

Thus, pursuant to the present invention the layer structure comprises a first electrically non-conductive polymer layer and a second electrically non-conductive polymer layer, which is placed at a distance from the first polymer layer. Said distance is at least 1 micrometer. Between the first and the second layer there is a third polymer layer, which is electrically conductive and includes an ionically conductive polymer.

More specifically, the layer structure according to the invention is mainly characterized by what is stated in the characterizing part of Claim 1.

The invention provides considerable advantages. Thus, a completely antistatic polymer film can be produced without reducing the mechanical properties of the film, because the electrically conductive middle layer can be made rather thin, whereby it won't affect the strength of the film. On the other hand, by using for instance ionomer-based conductive polymers the strength of the film can even be improved by means of the present invention. Usually, the thickness of the middle layer is approx. 10 % or less of the total thickness of the film. This reduces the wearing of the ionically conductive polymer and, consequently, the price of the product. The typical thickness of a film is 2 - 10 micrometers.

The ionically conductive polymers can in the form of a film be colorless or even translucent/transparent, whereby bright or semi-bright films suitable for different packaging applications can be produced in accordance with the invention. The materials are weldable. A multilayer film according to the present invention charges e.g. triboelectrically little or not at all. It's charge decay time is exceptionally short, typically less than 2 s (determined according to Standard IEC 61340-5-1), although the surface resistivity is the same or essentially the same (within the tolerance of one decade) as for the surface material, e.g. for polyethylene 10¹⁴ ohm/sq.

We have also observed that the electrical properties remain constant in a wide air humidity range, and in a relative humidity of for instance 12 % the charge decay times are typically less than 20 s, even less than 0.1 s. This cannot be reached by known solutions. In this respect the structure differs clearly from, e.g., antistatic films in the markets whose antistatic properties reduce significantly when the concentration values of the relative humidity are low.

Furthermore, the stretching of said layer structure does not affect the accumulation of charge of the multilayer film.

Layer structures according to the present invention can be produced cost-effectively and they can be produced by conventional methods for film forming. It is also possible to produce deep-drawn sheets, which can be transformed, e.g., into transport containers for the needs of the electronic industry.

The invention is examined below with the help of a detailed description and a number of exemplary embodiments.

The layer structure according to the present invention comprises a first and a second electrically non-conductive polymer layer, and between these a third, electrically at least partly conductive layer. Usually, the first and the second layer form the surface layers of the layer structure and consist of typical thermoplastic film materials. The first and the second layers can be of the same kind or different. They can be associated with each other via the third layer, whereby the distance between them corresponds exactly to the thickness of the conductive layer (typically approx. 1 ― 10 micrometers, as described below). However, between the first and the second layers there can be other layers.

The third layer comprises an ionically conductive polymer having a volume resistivity of 10⁴ Ω/sq ― 10¹² Ω/sq, preferably at most approx. 5 × 10⁹ Ω/sq. Pursuant to the invention a "non-chargeable or weakly chargeable" layer structure, such as a multilayer film, is obtained as a result with the same or essentially (e.g. within the tolerance of one decade) the same surface resistivity as the surface material, for instance for polyethylene 10¹⁴ ohm/sq, although it has a short charge decay time. The charge decay time of the structures being the subject matter of the invention is typically at most 15 s, e.g. at most 10 s, in particular at most 3 s, preferably at most 2 s. The conductive layer forms the inner layer of the layer structure, and on both sides thereof there is at least one non-conductive layer.

The "non-chargeable or weakly chargeable" layer structure is according to the present invention a structure with a charge decay time (determined according to the method presented below) of at most 120 s, most suitably at most 15 s, preferably at most 3 s.

The first and second layer consist of thermoplastic polymers of which the following can be mentioned; polyamides, polyesters, polyesteramides, polyvinyls, including polyvinyl chloride, polyolefins, acrylic polymers and polyurethanes, as well as mixtures thereof. For the forming of for example planar films it is also possible to use polycarbonates, polyoximethylene, polyphenylene sulfide, polyphenylene oxide and polystyrene compounds, as well as mixtures of said polymers.

Said thermoplasts are the principal components in the multilayer film, that is their part of the layer structure is usually over 50 mass %. Typically, the part of the thermoplasts (particularly of the first and second layer) of the layer structure is at least 55 mass %, most suitably at least 60 mass %, preferably at least 70 mass % and especially preferably at least 80 mass %. The third layer's part of the mass is correspondingly less than 50 %, typically at most 45 %, most suitably at most 40, preferably at most 30 % and particularly at most 20 mass %.

The polyolefins are very suitable coextrudable and blow moldable film polymers. Examples of polyolefins are especially polypropylene (PP), polyisobutylene, polybut-1-ene, poly-4-methylpent-1-ene, polyisoprene, polybuthadiene, polycyclopentene, norbornene, as well as the polyethylenes (PE), high density polyethylene (HDPE), high molar mass polyethylene (HDPE-HMW), high density and ultra high molar mass polyethylene (HDPE-UHMW), medium density polyethylene (MDPE), low density polyethylene (LDPE), linear low density polyethylenes (LLDPE), (VLDPE) and (ULDPE). The polyesters are also easily melt processable, whereby polyethylene terephthalate, polybuthylene terephthalate as well as their compounds are particularly suitable.

Also liquide crystal plastic polyesters and polyesteramides can be used.

The following can be mentioned as examples of particularly suitable polymers: monoolefin and diolefin copolymers as well as their monomers and copolymers formed by other vinylmonomers, such as ethel/propylene copolymers, linear low density polyethylene (LLDPE) and mixtures thereof with low density polyethylene (LDPE), propylene/but-1-ene copolymers, propylene/isobutene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers), as well as ethylene and propylene terpolymers formed with other unsaturated monomers, such as with diene. As examples of diene-based comonomers of terpolymers can be mentioned hexadiene, dicyclopentadiene and ethylidene-norbornene as well as mutual mixtures of these copolymers and mixtures with the above mentioned polymers, e.g., mixtures of polypropylene/ethylene-propylene copolymers, LDPE/ethylene-vinyl acetate copolymers (EVA), LDPE/ethylene-acrylic acid copolymers (EAA), LLDPE/EVA, LLDPE/EAA as well as various or random-polyalkylene/carbon monoxide copolymers and mixtures formed by their mixtures including other polymers, such as polyamides (PA 6 or 6,6 or 11 or 12 or 6/6,6 -copolymers including OPA), polyethylene terephthalate (PET including OPET), polyethylene aphthalate (PEN), ethylene vinyl alcohol (EvOH), polyproene (including OPP), ethylene acrylic acid copolymers their salts, ethylene methacrylic acid copolymers and their salts, as well as polyvinylidene chloride (PVDC).

There can be several of the above described layers in the layer structure, as described below.

Besides the synthetic polymers at least one of the electrically non-conductive layers can be derived from a biopolymer, such as cellulose and/or lignocellulose fibres. Thus, according to a preferred embodiment paper or board laminate is produced, which laminate includes a middle layer corresponding to the above mentioned third layer, and whereon (on the opposite side in relation to the paper or board layer) there is a film layer consisting of the above-mentioned thermoplastic material.

The third layer contains one or several ionically conductive polymers capable of transporting charges, or it is formed of mixtures of charge transporting polymers or charge non-transporting polymers. The volume resistivity of the ionically conductive layer is typically within the range of approx. 10⁴ Ω/sq ― 10¹² Ω/sq, preferably approx. 10⁵ Ω/sq - 10⁹ Ω/sq, the volume resistivity is especially preferably at most approx. 5 × 10⁹ Ω/sq. Therefore, it is according to the present invention "electrically conductive", which concept covers all of the above presented conductivity areas.

Preferably ions are dissolved into the dissipative polymer as charge carriers. The ions can be anions, cations or mixtures thereof. Typically, the electrical conductivity already increases the concentration which is 0.1 milllimols ions/gram polymer blend, whereby the accumulation of charge of the film hereby decreases. It is possible to use some ions even over 15 mmol/gram, when the ionically conductive polymer is stable enough.

The dissipative polymer used in the present invention can be of its structure, e.g., polyether amide, polyetherester or polyether urethane or a mixture thereof. The polymers including a polyether block are especially preferred. The polyethter block is most suitably amorphous (non-crystalline). The molar mass (M_{w}) of the polyether block is preferably approx. 300 - 3000. The polyether block can for instance be polyethene oxide or polypropylene oxide (in general polyalkylene oxide) or their copolymer. The " alkylene" - group contains most suitably 2 ― 6 carbon atoms. Its part of the polymer is in general approx. 30 - 85 mass %, typically approx. 40 - 80 mass %.

Consequently, especially preferred polymers are polyether block copolyester, polyetherester amide, polyether block copolyamide and segmented polyether urethane. The polyamide component may for example be PA-12 or PA-6, and the polyester component is typically polyethylene terephthalate.

Polymers suitable for the present invention are described for instance in the following patent specifications:
US 2,623,031, US 3,651,014, US 3,763,109, US 3,896,078, US 4,115,475, US 4,195,015, US 4,230,838, US 4,331,786, US 4,332,920, US 4,361,680, US 4,719,263, US 4,839,441, US 4,864,014, US 4,931,506, US 5,101,139, US 5,159,053, US 5,298,558, US 5,237,009, US 5,342,889, US 5,574,104, US 5,604,284, US 5,886,098, EP 0 613 919 A1 as well as in the PCT published application WO 03/000789.

Commercially available polymers suitable for the invention and containing polyether include Atochem's Pebax, Ciba's Irgastat, Du Pont's Hytrel, Nippon Zeon's Hydrin, Noveon's Stat-rite, Sanyo Chemical's Pelestat and IPE of IonPhasE Oy.

Based upon our experiments we can state that the layer structure according to the present invention becomes non-chargeable or at most weakly chargeable if a third (that is an electrically conductive layer) contains at least approx. 6 mass %, preferably at least 10 mass % polyether blocks of the layer weight. Most suitably the ionically conductive polymer layer contians polyether in an amount of 6 - 25 mass % of the total mass of the layer. The ionically conductive layer contains most suitably carboxylic acid or carboxylase in the amount of 0.1 - 10 mass % of the total mass of the layer.

Such a material can also contain ionomers, as described below. These may contribute to melt processing and improve mechanical properties of the films.

Dissolvable cations according to the present invention are monovalent alkali metal ions, earth alkali metal ions, transition metal ions, mono-, di-, and trisubstituted imidazoles, substituted pyridium ions, substituted pyrrolidinium ions, tetraalkyl phosphoniums. Anions according to the invention are alkyl sulfate and alkyl sulphonate, tosylate ion, triphlate ion, [CF₃CO₂]-, amide- and imide ions, bis(trifluorosulfon)imide, bis(toluenesulfon)imide, perchlorate ion.

The following can be mentioned as examples of suitable salts:
LiClO₄, LiCF₃ SO₃, NaClO₄, LiBF₄, NaBF₄, KBF₄, NaCF₃ SO₃, KClO₄, KPF₆, KCF₃ SO₃, KC₄ F₉ SO₃, Ca(ClO₄)₂, Ca(PF₆)₂, Mg(ClO₄)₂, Mg(CF₃ SO₃)₂, Zn(ClO₄)₂, Zn(PF6)₂ and Ca(CF₃ SO₃)₂.

Monovalent, alkali metal ions are especially preferred. Lithium, sodium, potassium, rubidium and cesium are used as such or in combination with, e.g., earth alkali metal ions.

The number of ions varies within a relative wide range. Generally, the electrical conductive polymer contains at least 0.1 mmol/g dissolved anions or monovalent cations.

Especially preferably there are monovalent metal cations at least 0.2 mmol, particularly at least 1 mmol, preferably 1.5 - 25 mmol/g dissolved polymer (however, see below). The number of the other monovalent cations can according to the size and physical properties of the ion (e.g., diffusibility / movement) vary in general in the range of 0.1 - 20 mmol/g polymer.

According to the invention the ions to be added are chosen according to the requirements of the end product to be produced of the film, taking the production conditions into account. For instance, in the food industry films containing lithium cannot be used in packaging materials, although the layer containing ions would be protected from both sides according to the present invention. Correspondingly, the K-ions are not desired in the applications of the electronics industry.

The conductivity of an ionically conductive polymer can be improved by including therein organic micromolecular compounds capable of dissolving ions, whereby they improve the movement of the ions as well as prevent the crystallization of the polyether blocks. Typically, the concentrations of these kinds of organic dissolvents are at least 0.1 mass % of the ionically conductive polymer or of a mixture thereof, preferably the concentration is approx. 0.2 - 5 mass %. It has been found that an addition of already 1 mass % may decrease the resistivity by one decade. Examples of suitable compounds are ethylene carbonate, propylene carbonate and diethyl carbonate.

As a specific example of a suitable ionically conductive polymer component is an electrically conductive polymer blend comprising a blend made up of at least two polymers, whereby the first polymer component of the blend comprises an ionomer and the second polymer component of the blend is a block polyether polymer. The ionomer consists most suitably of a copolymer made up of an olefin, such as ethylene and/or propylene, and an unsaturated carboxylic acid and/or carboxylic acid anhydride, the copolymer being ionically crosslinked. The block polyether polymer consists in particular of a polyether block and a polyamide, polyester or polyurethane block. The acid groups of the ionomer are at least partly ionized with cations. Likewise, the polyether blocks of the block polymer are at least partly in the form of a salt. The cations cause a crosslinking of the ionomers and a coordination of the block polymers, whereby the strength of the polymer blend increases considerably at the same time as ionic bonds are formed, and as the alkali cations are coordinated to the ethers, the electrical conductivity of the blend increases significantly. The ionic bond according to the invention is also thermally reversible. In the polymer blend the number of the acid groups or the acid anhydride groups of the ionomer is typically approx. 0.1 - 15 molar % of the ionomer.

The cations are preferably derived from alkali metals, preferable alkali metals including lithium, sodium, potassium, rubidium and cesium, and mixtures thereof. The alkali metal is present in an amount of approx. 0.05 - 50.0 millimols/gram, preferably approx. 0.1 - 20 millimols/gram of the polymer blend. With the polymer a high electrical conductivity and excellent mechanical properties are simultaneously obtained.

The described blends can be prepared by mixing together 90 - 10 parts by weight of a copolymer made up of an olefin and an unsaturated carboxylic acid and/or a carboxylic acid anhydride, 10 - 90 parts by weight of a block polyether as well as an alkali metal compound, the amount of which corresponds to 0.05 - 50 millimols of the alkali metal ion / 1 g of the polymer blend. The mixing is carried out at an elevated temperature, preferably in a molten state, and it is continued until the alkali metal compound has substantially completely reacted with the polymer components of the mixture, whereafter the obtained polymer blend can be processed to a film, the thickness of which is 1 - 100 micrometers, preferably 1 ― 10 micrometers.

The aforementioned materials and production thereof are described more closely in EP patent applications 1 406 968 and 1 439 953. Thus, in layer structures manufactured from these preferable materials, the inner layer includes ionically conducting polymer, which consists of a blend of two polymers, whereby the first polymer component of the blend is an ionomer and the other polymer component is a block polyether polymer, wherein the content of polyether blocks in the inner layer can be in particular at least 6 mass %. The surface layer is most preferably formed of electrically non-conductive polymer, whereby, however, the charge decay time of the layer structure is less than 10 s as determined according to standard IEC 61340-5-1 and the surface resistivity is the same or essentially the same as the surface resistivity of the material of the surface layer.

A special advantage of the presented material is, in addition to those mentioned above, that it can be used as very thin layers (even as layers of less than 5 micrometers). It should also be noted that multilayer films formed of materials according to the ionomer-based application can be manufactured utterly clear.

Besides the ionically conductive polymer the third layer may contain a blend component, such as one of the above mentioned thermoplastic polymers suitable for the use in the first and second layer. By using the same polymer as in the adjacent first and/or second layer, the third layer can be connected to this layer without any use of separate glue polymers (tielayer). Generally, the amount of thermoplast in the blend of the third layer is at least 10 mass %, particularly at least 25 mass %, and especially preferably approx. 40 - 60 mass %.

For the connecting of the third layer to the adjacent layer a glue polymer may also be used, such as an olefin plastomer or a terpolymer (Lotader) made up of ethylene, acrylic acid ester and maleic acid or a copolyethylene grafted with a maleic acid anhydride.

In the film according to the present invention there are 3 or more layers. Typically, there are at most 20 layers, most suitably 3 ― 7 layers, especially preferably 3, 4, 5, 6 or 7 layers. Of these layers all but one can consist of electrically non-conductive layers. However, it is, if desired, possible to produce a layer structure with a plurality of ionically conductive layers. It is essential in terms of the invention that the surface layers of the structure are electrically non-conductive.

In a film with A, B, C -structures an ion conductive plastic blend according to the present invention is used in the B-layer. The thickness of the film is generally 1 - 1500 micrometers, particularly approx. 2 - 500 micrometers, especially preferably approx. 5 - 150 micrometers.

The thickness of a multilayer polyolefin film is typically approx. 5 - 300 micrometers, particularly approx. 10 - 250 micrometers, preferably approx. 10 - 150 micrometers.

Of the total thickness of the layer, the layer containing ionically conductive polymer forms at most approx. 10 %, typically approx. 1 ― 20 micrometers, particularly approx. 1 ― 10 micrometers.

On the basis of the above mentioned a multilayer thermoplastic multilayer film is achieved according to a preferred embodiment of the invention, which film comprises thermoplastic surface layers as well as an inner layer between these containing an electrically conductive polymer layer, whereby the inner layer comprises at least one polymer material which is ionically conductive, and whereby the volume resistivity of the inner layer is 5×10⁹ ohms/sq or less and the charge decay time of the layer structure is less than 15 s, particularly less than 10 s.

A film produced according to a preferred embodiment of the invention contains as its principal component (forms at least 50 mass %, preferably at least 75 mass % of the film) polyamide, polyester or polyolefin or a mixture thereof. The film containing polyolefin, especially polyethylene or polypropylene or polyester or a corresponding thermoplast functions hereby as a stretch or shrink film.

Pursuant to a method, not forming part of the present invention, for the production of a non-chargeable or weakly chargeable layer structure with three or several layers
- a first electrically non-conductive polymer layer is formed,
- a second electrically non-conductive polymer layer is placed at a distance from the first polymer layer, and
- between the first and the second layer a third polymer layer is arranged which is at least partly electrically conductive or has antistatic properties,
whereby at least one of the electrically non-conductive polymer layers forms the surface layer of the layer structure. As noted above, the third layer is made up of an ionically conductive polymer, which is arranged in direct contact with the surface layer of the film, such that it is fixed thereto.

The structure is produced most suitably by coextrusion or lamination of blown or planar films.

Films according to the invention can be used for instance in ESD packages, such as packages for the electronics industry, packages for the chemicals industry, packages for the food industry and daily consumer goods packages, wherein the products charge rapidly. The films have good strength properties and by suitably combining, e.g., LDPE and HDPE qualities stiffness and barrier properties are combined in the packaging material. A PO packaging film is essentially transparent which makes the reading of product codes, such as bar codes, possible through the film.

Preferable applications are further among other things different stretch or shrink films based upon polyolefin materials. Materials such like these are not possible to produce according to conventional solutions.

As special applications plastic wraps and plastic packages for hygienic products can be mentioned, whereby the static electricity accumulated in the wrap or package normally significantly decreases the running speed of a packaging machine. The packaging speed can by means of the invention be increased by approx. 10 - 30 per cent.

Other applications are air-bubble packages and deep draw packages, such as transport tapes for components (chips-carrier tapes). The latter ones consist in general of three layers, whereby the thickest one comprises a polyester or a polyurethane forming a bearing basic structure, and the surface structure is made up of polyethylene, whereby between these is, e.g., a mixture of polyolefin and an ionically conductive polymer. The relative thicknesses of the layers are for instance 200 - 400 : 5 - 10 : 30 - 100, whereby the total thickness is approx. 200 - 1500 micrometers.

### Examples

An ionically conductive polymer blend A was produced by means of a double-screw extruder. The blend contained 50 mass % ethylene/butyl acrylate/methacrylic acid terpolymers (BA 24 mass %, MAA 8 mass %), and 50 mass % polyethylene oxide and polyamide block copolymers (PA 50 mass %, PEO 50 mass %). As ions K⁺ and Li-tosylate were used, 0.3 mass % of both.

An ionically conductive polymer blend B was produced by means of a double-screw extruder. The blend contained 50 mass % ethylene/butyl acrylate/methacrylic acid terpolymers (BA 24 mass %, MAA 8 mass %), and 50 mass % polyethylene oxide and polyurethane block copolymers (PUR 30 mass %, PEO 70 mass %). As ions K⁺ and Li-tosylate were used, 0.3 mass % of both.

The example films were produced by means of a pilot scale three-layer coextrusion device.
1. A three-layer structure of a thickness of 61 micrometers was blown, the 5 micrometers strong middle layer of which consisted of a blend of LDPE (50 mass%) used as a surface material and an ionically conductive polymer A (50 mass%). The strength of both LDPE surfaces was 28 micrometers.
   RE 1. Polypink -film new.
   RE 2. Polypink -film old.

The charge decay times of the example films and of two reference example films were measured by means of induction and tribo methods until 20 kV. The results are shown in Table 1. The maximum accumulation of charge is determined after the exposure as the biggest observation. After the observation of the maximum the residual charge is measured after 10 seconds.

The induction charging was performed according to prEN 1149-3 FINAL DRAFT [40]. A voltage of 1.2 kV was added to the sheet. The voltage source was controlled by means of a signal generator.

By means of a tribo charging device provided with automatic aluminum bars a tribocharging was performed. The bars were cleaned with isopropanol when the samples were changed. The speed of the bars was 250 mm/s, and the sample size was 100 mm × 300 mm. By the measurements a Kleinwächter EFM231 electric field strength measurer was used.

**Table 1. Decay times of induction and tribo charge**

| Example | Induction | Tribo |
|---|---|---|
| 1. | 1 s | >0,5 s |
| RE 1. | 3-4 s | 4-5 s |
| RE 2. | 60-80 s | 60-70 s |

2. A three-layer structure of a thickness of 80 micrometers was blown, the 5 micrometers strong middle layer of which consisted of a blend of LD0PE 60 mass % used as inner surface material and an ion conductive polymer A 40 mass %. The strength of the LDPE inner surface was 40 micrometers and the strength of the HDPE external surface was 35 micrometers.
3. A three-layer structure of a thickness of 80 micrometers was blown, the 5 micrometers strong middle layer of which consisted of a blend of LDPE 50 mass % used as inner surface material and an ion conductive polymer A 50 mass %. The strength of the LDPE inner surface was 40 micrometers and the strength of the HDPE external surface was 35 micrometers.
4. A three-layer structure of a thickness of 80 micrometers was blown, the 5 micrometers strong middle layer of which consisted of a blend of LDPE 60 mass % used as inner surface material and an ion conductive polymer B 40 mass %. The strength of the LDPE inner surface was 40 micrometers and the strength of the HDPE external surface was 35 micrometers.
5. A three-layer structure of a thickness of 80 micrometers was blown, the 5 micrometers strong middle layer of which consisted of a blend of LDPE 70 mass % used as inner surface material and an ion conductive polymer B 30 mass %. The strength of the LDPE inner surface was 40 micrometers and the strength of the HDPE external surface was 35 micrometers.

The charge decay time, residual voltage, electric field strength and surface resistivity of the samples 2-5 were measured. The samples were charged by corona treatment during the decay time measurements, and when the electric field strength was measured, the samples were charged by rubbing. The Standard IEC 61340-5-1 was used.

**Table 2**

| Sample | Decay time | Residual voltage | Electrostatic field | Surface Resistivity |
|---|---|---|---|---|
| 2 | 15 s | -300 V | -200 kV/m | 3 × 10¹³ ohm |
| 3 | 1 s | -60 V | -2 kV/m | 5 × 10¹³ ohm |
| 4 | 0,5 s | -40 V | -2 kV/m | 1 × 10¹³ ohm |
| 5 | 0,2 s | -100 V | -6 kV/m | 3 × 10¹³ ohm |

The examples 2 ― 5 show clearly the effect of the ion conductive plastic on the electrostatic properties of the polyethylene film. Although the surface resistivity is within the class of normal polyethylene, the decay time is sufficient for demanding electronic or pharmaceutical packages.

## Claims

1. A non-chargeable or weakly chargeable layer structure comprising,
- a first electrically non-conductive polymer layer,
- a second electrically non-conductive polymer layer placed at a distance from the first polymer layer, and
- between the first and second layer a third polymer layer, which is electrically conductive, and
**characterized in that**
- the third layer contains an ionically conductive polymer comprising a polymer containing polyether blocks, whereby the concentration of the polyether blocks in the third layer is at least 6 mass %, and
- the layer containing the ionically conductive polymer has a thickness of at least 1 micrometer, but at most 20 % of the total thickness of the film.

2. The layer structure according to Claim 1, **characterized in that** the layer containing the ionically conductive polymer forms the inner layer of a film and it is in direct contact with the surface layers of the film and is fixed thereto.

3. The layer structure according to Claim 1 or 2, **characterized in that** the layer containing the ionically conductive polymer has a thickness of at most 10 % of the total thickness of the film.

4. The layer structure according to any of the preceding claims, **characterized in that** the first and second layer are mutually independently made up of polyamide, polyester, polyester amide, polyvinyl, polyolefin, acrylic polymer or polyurethane or a mixture thereof.

5. The layer structure according to any of the preceding claims, **characterized in that** at least one of the first and second layer comprises a layer produced of natural fibers.

6. The layer structure according to any of the preceding claims, **characterized in that** the concentration of the polyether blocks in the third layer is 10 - 25 mass %.

7. The layer structure according to Claim 6, **characterized in that** the ionically conductive polymer layer contains carboxylic acid or carboxylase in an amount of 0.1 - 10 mass % of the total mass of the layer.

8. The layer structure according to Claim 6 or 7, **characterized in that** the electrically conductive polymer contains a polyether block with a molar mass of 300 - 3000.

9. The layer structure according to any of Claims 6 ― 8, **characterized in that** the electrically conductive polymer contains a polyether block of polyethylene oxide or polypropylene oxide or their copolymer.

10. The layer structure according to any of Claims 6 ― 9, **characterized in that** the ionically conductive polymer comprises a polyetherester amide containing a polyether block, a polyether block copolymer or a segmented polyether urethane.

## Patentansprüche

1. Nicht aufladbare oder schwach aufladbare Schichtstruktur, umfassend
- eine erste elektrisch nicht leitfähige Polymerschicht,
- eine zweite elektrisch nicht leitfähige Polymerschicht, die in einem Abstand von der ersten Polymerschicht angeordnet ist, und
- eine dritte Polymerschicht zwischen der ersten und der zweiten Schicht, die elektrisch leitfähig ist, und **dadurch gekennzeichnet, dass**,
- die dritte Schicht ein ionisch leitfähiges Polymer enthält, das ein Polyetherblöcke enthaltendes Polymer umfasst, wonach die Konzentration der Polyetherblöcke in der dritten Schicht mindestens 6 Massen-% beträgt, und
- die das ionisch leitfähige Polymer enthaltende Schicht eine Dicke von mindestens 1 Mikrometer, aber höchstens 20 % der Gesamtdicke der Folie, aufweist.

2. Schichtstruktur nach Anspruch 1, **dadurch gekennzeichnet, dass** die das ionisch leitfähige Polymer enthaltende Schicht die Innenschicht einer Folie bildet und diese in direktem Kontakt mit den Oberflächenschichten der Folie ist und an diese gebunden ist.

3. Schichtstruktur nach Anspruch 1 oder 2, **dadurch gekennzeichnet, dass** die das ionisch leitfähige Polymer enthaltende Schicht eine Dicke von höchstens 10 % der Gesamtdicke der Folie aufweist.

4. Schichtstruktur nach einem der vorhergehenden Ansprüche, **dadurch gekennzeichnet, dass** sowohl die erste als auch die zweite Schicht unabhängig aus Polyamid, Polyester, Polyesteramid, Polyvinyl, Polyolefin, Acrylpolymer oder Polyurethan oder einer Mischung davon aufgebaut ist.

5. Schichtstruktur nach einem der vorhergehenden Ansprüche, **dadurch gekennzeichnet, dass** die erste Schicht und/oder die zweite Schicht eine aus Naturfasern hergestellte Schicht umfassen.

6. Schichtstruktur nach einem der vorhergehenden Ansprüche, **dadurch gekennzeichnet, dass** die Konzentration der Polyetherblöcke in der dritten Schicht 10-25 Massen-% beträgt.

7. Schichtstruktur nach Anspruch 6, **dadurch gekennzeichnet, dass** die Schicht des ionisch leitfähigen Polymers Carbonsäure oder Carboxylase in einer Menge von 0,1―10 Massen-% der Gesamtmasse der Schicht enthält.

8. Schichtstruktur nach Anspruch 6 oder 7, **dadurch gekennzeichnet, dass** das elektrisch leitfähige Polymer einen Polyetherblock mit einer molaren Masse von 300-3000 enthält.

9. Schichtstruktur nach einem der Ansprüche 6-8, **dadurch gekennzeichnet, dass** das elektrisch leitfähige Polymer einen Polyetherblock aus Polyethylenoxid oder Polypropylenoxid oder deren Copolymer enthält.

10. Schichtstruktur nach einem der Ansprüche 6-9, **dadurch gekennzeichnet, dass** das elektrisch leitfähige Polymer ein Polyetheresteramid umfasst, das einen Polyetherblock, ein Polyetherblockcopolymer oder ein segmentiertes Polyetherurethan enthält.

## Revendications

1. Structure de couche non chargeable ou faiblement chargeable comprenant,
- une première couche de polymère électriquement non conductrice
- une deuxième couche de polymère électriquement non conductrice placée à une distance de la première couche de polymère, et
- entre les première et deuxième couches, une troisième couche de polymère, qui est électriquement conductrice, et
**caractérisée en ce que**
- la troisième couche contient un polymère ioniquement conducteur comprenant un polymère contenant des blocs de polyéther, la concentration des blocs polyéther dans la troisième couche étant d'au moins 6 % en masse, et
- la couche contenant le polymère ioniquement conducteur possédant une épaisseur d'au moins 1 micromètre, mais d'au plus 20 % de l'épaisseur totale du film.

2. Structure de couche selon la revendication 1, **caractérisée en ce que** la couche contenant le polymère ioniquement conducteur forme la couche interne d'un film et est en contact direct avec les couches de surface du film et est fixée à celles-ci.

3. Structure de couche selon la revendication 1 ou 2, **caractérisée en ce que** la couche contenant le polymère ioniquement conducteur possède une épaisseur d'au plus 10 % de l'épaisseur totale du film.

4. Structure de couche selon l'une quelconque des revendications précédentes, **caractérisée en ce que** les première et deuxième couches sont mutuellement indépendamment composées de polyamide, de polyester, de polyester amide, de polyvinyle, de polyoléfine, de polymère acrylique ou de polyuréthane ou d'un mélange correspondant.

5. Structure de couche selon l'une quelconque des revendications précédentes, **caractérisée en ce qu'**au moins l'une parmi les première et deuxième couches comprend une couche produite avec des fibres naturelles.

6. Structure de couche selon l'une quelconque des revendications précédentes, **caractérisée en ce que** la concentration des blocs de polyéther dans la troisième couche est de 10 à 25 % en masse.

7. Structure de couche selon la revendication 6, **caractérisée en ce que** la couche de polymère ioniquement conducteur contient un acide carboxylique ou une carboxylase en une quantité de 0,1 à 10 % en masse de la masse totale de la couche.

8. Structure de couche selon la revendication 6 ou 7, **caractérisée en ce que** le polymère électriquement conducteur contient un bloc de polyéther doté d'une masse molaire de 300 à 3 000.

9. Structure de couche selon l'une quelconque des revendications 6 à 8, **caractérisée en ce que** le polymère électriquement conducteur contient un bloc de polyéther composé de poly(oxyde d'éthylène) ou de poly(oxyde de propylène) ou leur copolymère.

10. Structure de couche selon l'une quelconque des revendications 6 à 9, **caractérisée en ce que** le polymère électriquement conducteur comprend un polyétherester amide contenant un bloc de polyéther, un copolymère de bloc de polyéther ou un polyéther uréthane segmenté.
